Europäisches Patentamt

European Patent Office

Office européen des brevets

(19)

(11) Publication number: **0 028 586**
**B1**

# (12) EUROPEAN PATENT SPECIFICATION

(45) Date of publication of patent specification: 23.03.83

(21) Application number: **80810331.1**

(22) Date of filing: **31.10.80**

(51) Int. Cl.³: **E 02 F 7/06, B 03 B 5/26**

(54) **Device for separating sand and/or gravel from water fed by a dredging suction pump, or for separating other granulated material from a fluid flow.**

(30) Priority: **05.11.79 YU 2705/79**

(43) Date of publication of application:
**13.05.81 Bulletin 81/19**

(45) Publication of the grant of the patent:
**23.03.83 Bulletin 83/12**

(84) Designated Contracting States:
**AT BE DE FR GB NL**

(56) References cited:
**DE - C - 32 315
FR - A - 388 920
FR - A - 1 593 900
US - A - 2 211 895
US - A - 2 356 469
US - A - 2 727 623
US - A - 3 387 706
US - A - 3 950 246
US - A - 4 033 470**

**PORTS AND DREDGING, no. 79, 1973, (NL)
"Een nieuw type grind-windzuiger", pages 8—9.**

(73) Proprietor: **Institut Tehnickih Nauka Srpske
Akademije Nauka I Umetnosti
Knez Mihajlova 35
Beograd (YU)**

(72) Inventor: **Zrnic, Nenad, Prof. Dr.
29, Novembra 66
Beograd (YU)**
Inventor: **Bilen, Branislav, Dr.
Kursulina, 5
Beograd (YU)**

(74) Representative: **Bovard, Fritz Albert et al,
Bovard & Cie Patentanwälte VSP Optingenstrasse
16
CH-3000 Bern 25 (CH)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Device for separating sand and/or gravel from water fed by a dredging suction pump, or for separating other granulated material from a fluid flow

The invention relates to a device for separating sand and/or gravel from water of a mixture fed by a dreging suction pump, or for separating other granulated material from a fluid flow, comprising a part for reducing kinetic energy, said part being formed by a breeches pipe and a baffle box into which two inlets of the breeches pipe disposed opposite one another open, a part for sorting, and a part for depositing, said part being formed by several deposition tanks. Such a device is known from US — A — 4 033 470.

Sand and/or gravel with water (mixture) are lifted from the river bottom by means of dredging pumps with suction pipe. The capacity of these pumps amounts to 1000 — 10000 m³/h of mixture having a volume concentration in the range from 8 to 20%, depending on the character of the soil. Such a comparatively low grade mixture has great kinetic energy as the speed of its motion through the pipes amounts to 2 or more meters per second in order to avoid the deposition of the transported material, i.e. the clogging of the pipe. In most cases the gravel or the sand is loaded on vessels, self- or - non-self propelled and of varying tonnage, and is transported to the unloading point. The loading of gravel is performed by pouring the mixture into the vessel's hold in which the gravel, as the useful cargo, is deposited, while the water, having served its purpose as the transportation medium flows back into the river over the rim or through special overflow ports in the vessel's hold.

In the loading or unloading operation when sand and gravel are carried by means of pipes, the following problems arise:

1. Because of the great kinetic energy of the mixture, it cannot be loaded on small capacity vessels nor on standard cargo boats, and therefore the big capacity dredgers use only big specially built vessels, which creates difficulties with regard to the economical use of the whole existing navigating pool.

2. On account of the said kinetic energy, part of the useful material from the mixture fails to deposit on time and returns back to the river, the consequence being a longer loading time of the vessel, i.e. a higher energy consumption per unit of useful material, and a frequent impossibility to load the vessel fully, so that the vessel, besides the useful material, transports also useless water.

3. The useful material deposited from the mixture contains in most cases also mud and other harmful components, and it is therefore expected that it be washed before use in serious building projects, and this causes an appreciable increase of costs.

4. The water which has carried the sand to the bank for embanking or for use spreads the sand over a large area, so that considerable mechanization must be used. If the mixture were concentrated before leaving the suction pipe, i.e. if the water were separated from it, the need for mechanization would decrease considerably.

In the US patent 4 033 470 the mixture of water and material is delivered to a baffle box having two inlets which are disposed opposite one another; the energy of the two inlet streams set into the baffle box is destroyed therein. Water and fines pass through screens positioned below the baffle box whilst larger solids constituting the cargo are retained.

By means of this device the great kinetic energy of the mixture is destroyed, however, the process of sorting and depositing of different sizes of cargo is not solved by simple means.

It is further known from the US patent 2 356 469 to discharge the wash water of an attachment for dredges and similar devices through an inclined exhaust conduit in which a control valve is pivotally mounted. The valve which is positioned adjacent a vertical conduit leading into· the exhaust conduit can be varied in its position through the operation of a control lever.

By this attachment only one of the existing problems is solved, however, it doesn't solve the complete separation process.

The object of the invention is to provide a device by means of which the above mentioned shortcomings should be eliminated. Such a device should comprise only few simple parts requiring uncomplicated maintenance. The process of separating should be carried out under economical conditions.

The inventive device is characterized in that said part for sorting is formed by at least one inclined channel having a deflector adjacent a discharge opening in the channel, and the three parts are unidirectionally inclined and arranged in a direct succession to one another, thus enabling to carry out the process of separation by gravity in a single continuous operation, said parts for reducing kinetic energy being directly connected to the pipe outlet of said dredging suction pump or the like.

The device of the invention functions in such a way that the useful components (sand or gravel) are separated in a moist state or with a negligible percentage of water at one outlet from the continuously fed mixture and the useful compounds are simultaneously washed.

At another outlet, a continuous separation of the water which has served as the transportation medium is simultaneously carried out.

The device being the subject of this invention is shown in the drawings in its implementation serving for the separation of sand and/or grave, wherein:

Figure 1 shows the whole device diagramatically;

Figure 2 is a plan view of the part for reducing the kinetic energy;

Figure 3 is a side elevation of the part for sorting; and

Figure 4 is a plan view of the part for sorting.

The device consists of three parts: the part A for reducing the kinetic energy, the part B for sorting, and the part C for depositing.

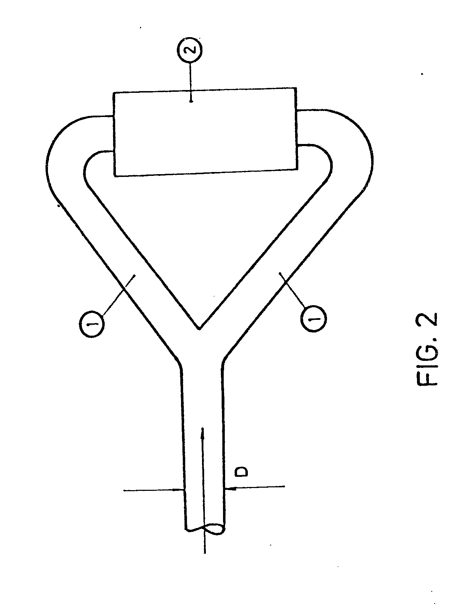

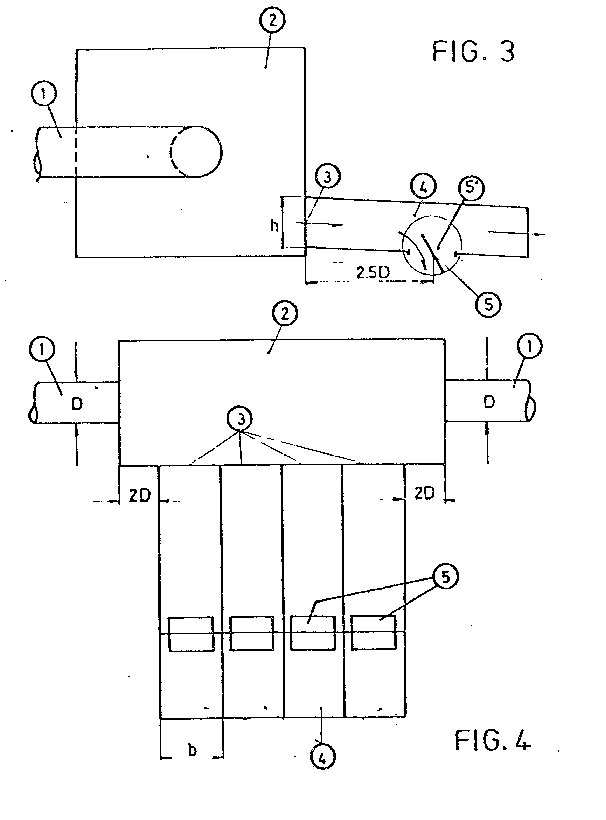

The part A for reducing the kinetic energy comprises a breeches pipe 1 and a baffle box 2 (fig. 2). The breeches pipe 1 is made with radii in conformity with the hydrodynamic rules for the turning of a jet and in function of the pipe diameter. The baffle box 2 has measurements which depend upon the diameter D of the breeches pipe 1 and upon the speed at which the mixture is trasported. The baffle box 2 has several discharge orifices 3 (fig. 4).

The principle used for reducing the kinetic energy is the collision between two jets. The collision of the two jets must take place at a moment when they have already sufficiently left the pipe, to avoid disturbances in the operation of the pump, i.e. a reduction of its effect. A similar result, but of somewhat smaller intensity, can be achieved by multiple breakage and sharp turning of the jet.

The part B for sorting comprises several channels 4 connected to the orifices 3, and deflectors 5. A port 5' is provided on the bottom of each channel 4. The discharge orifices 3 are positioned at a distance of about 2D from the ends of the baffle box 2 and the total area of these orifices should be 6 to 7 $D^2 \pi/4$. Each channel 4 has a width $b$ and a height $h$.

The channels 4 and the discharge orifices 3 are of a rectangular cross section. A $b/h \approx 2$ is used. The length of each channel 4 should be such that the deflector 5 can be easily accommodated therein, while the distance between the orifice 3 and the deflector 5 is 2 — 2,5 D. The length of the remaining part of each channel 4 is adapted to the deposition over-flow tanks 6, 9, 12,.

Deflector 5 is a sheetmetal baffle fixed in a position which usually forms an angle of about 45° with the bottom of the channel 4. It extends over the whole width of the channel and its height is so selected that the upper edge of the deflector be at about 0,2 — 0,25 h. The deflector 5 is located in the port 5' of the channel 4.

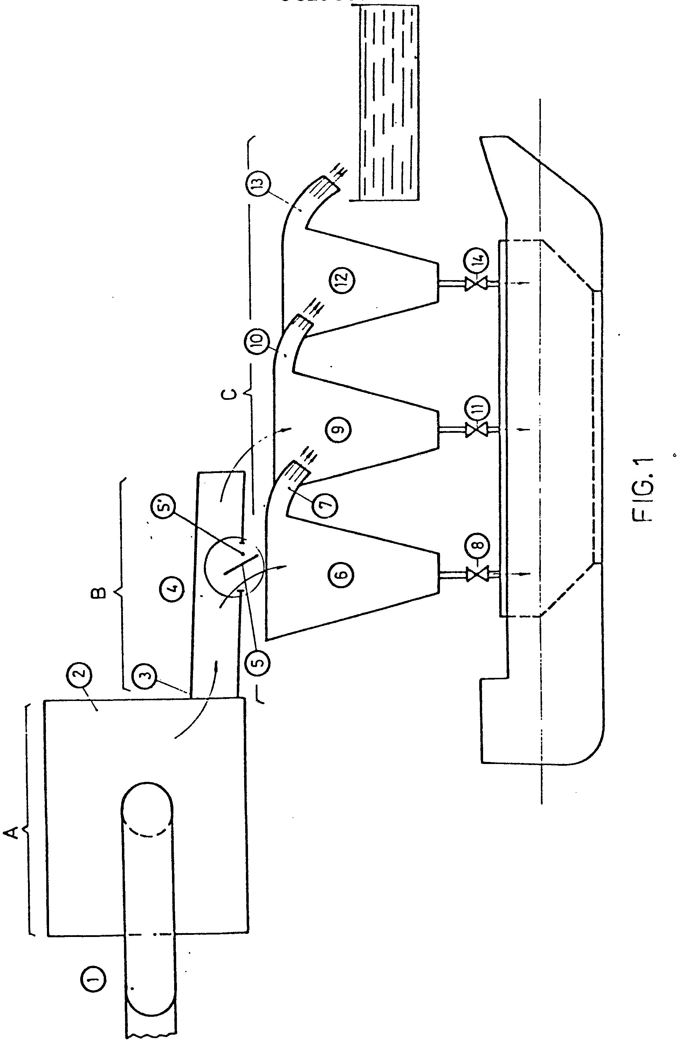

The principle used in this part is motion in a sub-critical speed range of 0,5 — 0,9 m/s, in which a horizontal flow would certainly clog because of quick deposition of the transported solids. To avoid this, the baffle box 2 along with the channels 4 is inclined at an angle which is determined experimentally. The flow in this sub-critical speed range is clearly separated into two phases. The upper layer in the channel contains water and the muddy components of the material, while in the bottom layer the useful solids move at somewhat lower speed. The deflector 5 deflects the part of the incoming flow of the mixture in which the solids are concentrated, forcing it to fill the first deposition tank 6 (fig.1).

The part C for depositing comprises several tanks, it being convenient to have three or more tanks (fig. 1). Each of these tanks 6, 9, 12 has parts for charging, for overflowing and for discharging.

The tank 6 according to fig. 1 is charged with concentrated mixture via the deflector 5, it overflows via the outlet 7, and is discharged through the valve or flap 8 into the vessel's hold, or into the stock of material on the bank.

The tank 9 is charged from the channel 4, it overflows via the outlet 10, and is discharged through the valve of flap 11.

The tank 12 is charged via the overflow outlet 10, it overflows via the outlet 13 into the river, and is discharged through the flap 14 either into a means of transport or back into the river, depending on the size of the solids.

By means of the overflow from one tank to another, the rough calibration of the material is also achieved. In the first tank 6 the bigger particles will be retained, in the second 9 smaller ones, and in the third 12 the smallest.

The size of the tanks depends upon the diameter D of the breeches pipe 1 and is determined experimentally for all the values of the suction pipe diameter which are used in practice.

The device can also be used for separating other types of granulated material from a fluid flow and for the rough calibration thereof.

The described device is not limited only to the above use but can also be applied in other technical fields.

## Claims

1. Device for separating sand and/or gravel from water or a mixture fed by a dredging suction pump, or for separating other granulated material from a fluid flow, comprising a part for reducing kinetic energy, (A) said part being formed by a breeches pipe (1) and a baffle box (2) into which two inlets of the breeches pipe disposed opposite one another open, a part for sorting (B) and a part for depositing, (C) said depositing part being formed by several deposition tanks (6, 9, 12), characterized in that said part for sorting (B) is formed by at least one inclined channel (4) having a deflector (5) adjacent a discharge opening (5') in the channel, and the three parts (A,B,C) are unidirectionally inclined and arranged in a direct succession to one another, thus enabling to carry out the process of separation by gravity in a single continuous operation said part (A) for reducing kinetic energy being directly connected to the pipe outlet of said dredging suction pump or the like.

2. Device according to claim 1, characterized in that several discharge orifices (3) are provided in the baffle box (2), and that at each discharge orifice (3) a channel (4) having a deflector (5) adjacent a discharge opening (5') in the channel is attached to the baffle box (2).

3. Device according to claims 1 and 2, characterized in that the discharge orifices (3) are positioned at a distance of approximately 2D from the ends of the baffle box (2) and have a total area of six or seven $D^2 \pi/4$, D being the diameter of the breeches pipe (1).

4. Device according to claim 1, characterized in that the deposition tanks (6, 9, 12) are provided with overflow outlets (7, 10, 13) at their upper ends, leading to the next tank or outward, and at the bottom with valves or flaps (8, 11, 14) for the distribution of said and/or gravel or the like.

## Revendications

1. Dispositif pour séparer le sable et/ou le gravier de l'eau dans un mélange amené par une pompe de succion de dragage, ou pour séparer d'autres matériaux granuleux d'une circulation de fluide, comprenant une partie severant à la réduction de l'énergie cinétique (A), laquelle partie est formée d'un tuyau bifurquant (1) et d'une boîte de déflexion (2) dans laquelle les deux arrivées du tuyau bifurquant s'ouvrent l'une en face de l'autre, une partie de tri (B), et une partie de dépôt (C), qui est formée' par plusieurs récipients de dépôt (6, 9, 12), caractérisé en ce que ladite partie de tri (B) est formée par au moins un canal incliné (4) présentant un déflecteur (5) adjacent à une ouverture de décharge (5') du canal, et en ce que les trois dites parties (A, B, C) sont inclinées uniformément et agencées en succession directe l'une à l'autre, de façon à permettre la mise en oeuvre du procédé de séparation par gravité en une unique opération continue, ladite partie de réduction d'énergie cinétique (A) étant directement connectée au tuyau de sortie de ladite pompe de succion de dragage ou organe similaire.

2. Dispositif selon la revendication 1, caractérisé en ce que plusieurs orifices de décharge (3) sont disposés dans la boîte de déflexion 2, et en ce que, à chaque orifice de décharge (3), un canal (4) muni d'un déflecteur (5) adjacent à une ouverture de décharge (5') dans le canal, est attaché à la boîte de déflexion (2).

3. Dispositif selon les revendications 2 et 2, caractérisé en ce que les orifices de décharge (3) sont positionnés à une distance d'approximativement 2D à partir des extrémités de la boîte de déflexion 2, et ont une aire totale de six à sept fois $D^2 \pi/4$, D étant le diamètre du tuyau bifurquant (1).

4. Dispositif selon la revendication 1, caractérisé en ce que les récipients de dépôt (6, 9, 12) sont munis d'échappements de trop-plein (7, 10, 13) à leur extrémité supérieure, et qui mènent au prochain récipient ou à l'extérieur, ces récipients étant également munis, à l'endroit de leur fond, de vannes ou de volets (8, 11, 14) pour la distribution du sable et/ou du gravier, ou d'un élément similaire.

## Patentansprüche

1. Vorrichtung zum Trennen von Sand und/ oder Kies von Wasser aus einem Gemisch, das von einer Saugbaggerpumpe gefördert wird, oder zum Trennen von anderem körnigem Material aus einem Fluidumstrom, mit einem Teil (A) zur Herabsetzung der kinetischen Energie, welcher Teil durch ein Zweigrohr (1) und durch einen Umlenkbehälter (2) gebildet ist, in welchem Behälter zwei gegeneinanderliegende Einlässe des Zweigrohres münden, einem Sortierteil (B) und einem Ablagerungsteil (C), welcher Ablagerungsteil durch mehrere Ablagerungstanks (6, 9, 12) gebildet ist, dadurch gekennzeichnet, dass der Sortierteil (B) durch mindestens einen geneigten Kanal (4) mit einem Ablenker (5) gebildet ist, welcher Ablenker in der Nähe einer im Kanal vorgesehenen Austrittsöffnung (5') liegt, und dass die drei Teile (A, B, C) einseitig geneigt und direkt nacheinanderfolgend angeordnet sind, wodurch ermöglicht wird, dass der Trennungsprozess durch Schwerkraft in einem einzigen ununterbrochen verlaufenden Vorgang erfolgt, wobei der Teil (A) zur Herabsetzung der kinetischen Engergie direkt an den Rohrauslass der Saugbaggerpumpe oder dergleichen angeschlossen ist.

2. Vorrichtung nach Patentanspruch 1, dadurch gekennzeichnet, dass der Umlenkbehälter (2) mehrere Ausflussöffnungen (3) aufweist, und dass an jeder Ausflussöffnung (3) ein Kanal (4) vorgesehen ist, der am Umlenkbehälter (2) befestigt ist und einen in der Nähe der im Kanal vorgesehenen Austrittsöffnung (5') angeordneten Ablenker (5) aufweist.

3. Vorrichtung nach den Patentansprüchen 1 und 2, dadurch gekennzeichnet, dass die Ausflussöffnungen (3) in einem Abstand von annähernd 2D von den Enden des Fangbehälters (2) liegen und eine Gesamtfläche von sechs bis sieben $D^2 \pi/4$ haben, wobei D der Durchmesser des Zweigrohres (1) ist.

4. Vorrichtung nach Patentanspruch 1, dadurch gekennzeichnet, dass die Ablagerungstanks (6, 9, 12) auf ihren oberen Enden mit Ueberlauföffnungen (7, 10, 13) versehen sind, die zu dem nächsten Tank oder nach aussen führen, und dass sie an der Unterseite mit Ventilen oder Klappen (8, 11, 14) zur Verteilung von Sand und/oder Kies oder dergleichen versehen sind.

FIG.1

FIG. 2

0028586

FIG. 3

FIG. 4

3